# EUROPEAN PATENT APPLICATION

(11) **EP 0 737 001 A2**
(43) Date of publication of application: **09.10.1996**
(21) Application number: 96302405.4
(22) Date of filing: 03.04.1996
(51) Int. Cl.: H04N 1/60

(54) **Method of color printing for liquid ink printers**

(30) Priority: 03.04.1995 US 415878
(71) Applicant: XEROX CORPORATION, Rochester New York 14644 (US)
(72) Inventor: Torpey, Peter A., Webster, NY 14580 (US)
(74) Representative: Goode, Ian Roy

(57) **Abstract**

A method for printing an image with a color liquid ink printer (58) having a bidirectional scanning carriage printhead for printing a swath of the image. The printer prints a swath of information according to a first color transform processor in a first direction of the bidirectional scanning carriage printhead and prints a swath of information according to a second color transform processor in a second direction of the bidirectional scanning carriage printhead. A first lookup table (52) is generated for converting device independent color information to device dependent information for printing in a forward swath of the reciprocating carriage. A second lookup table (54) is generated for converting device independent color information to device dependent information for printing in the reverse direction. Although the order of inking is reversed in the reverse direction, color banding is reduced or eliminated since different lookup tables are used for printing information in different directions.

## Description

The present invention relates generally to liquid ink recording apparatus and, more particularly, relates to a method of color printing for drop-on-demand type liquid ink printers.

Liquid ink printers typically print color and/or monochrome images received from an image output device such as a personal computer, a scanner, or a workstation. The color images printed are produced by printing with several colored inks or colorants of different colors at a time. The color of the ink and amount of ink deposited by the printer is determined according to image information received from a document creator such as a scanner or a computer workstation. The document creator provides an image defined in colorimetric terms, typically digital in nature R, G, B. Commonly, this description may be part of a Page Description Language (PDL) file describing the document. In the case of computer generated images, colors defined by the user at the user interface of a workstation can be defined initially in color space of tristimulus values. These colors are defined independently of any particular device, and accordingly reference is made to the information as being "device independent".

The printer, on the other hand, often has an output which can be defined as existing in a color space called CMYK (cyan-magenta-yellow-key or black) which is uniquely defined for the printer by its capabilities and colorants. Printers operate by the addition of overlapping multiple layers of ink or colorant in layers to a page. The response of the printer tends to be relatively non-linear. These colors are defined for a particular device, and accordingly reference is made to the information as being "device dependent". Thus, while a printer receives information in a device independent color space, it must convert that information to print in a device dependent color space, which reflects a possible range of colors of the printer; and secondly, printing of that image with a color printer in accordance with the colors defined by the scanner or computer generated image.

The perceived color of the image is determined not only by the relative amounts of each colorant put down on the recording medium, but also the order in which the colorants are printed. Thus, for example, the color produced by printing with cyan ink first and then printing with magenta ink is different than the color that would be produced if the magenta ink was printed prior to the cyan ink. Consequently, in a typical liquid ink printer configuration having a plurality of printheads arranged in a side by side configuration where each printhead deposits a different colorant, printing is done in only one direction, typically, from right to left. In order to preserve the order of inking, printing in the reverse direction is not performed to prevent unacceptable color banding from occurring.

US-A-5,305,119 describes a printer responsive to a device independent colorimetric description of an image. Color correction transformation is accomplished via a method of interpolating printer response from a look-up table indexing colorimetric description of measured real responses which take into account subsequent black addition and signal linearization.

US-A-5,331,439 describes a color transformation apparatus for transforming an input color space into an output color space. A first lookup table transforms a first portion of the input color space into a corresponding first portion of the output color space and a second lookup table transforms a second portion of the input color space into a corresponding second portion of the output color space.

In accordance with one aspect of the present invention, there is provided a method of printing an image including color produced by depositing overlapping colorants on a recording medium. The method includes the steps of determining the order of overlapping colorants to be deposited on the recording medium, selecting a device dependent color space from a plurality of device dependent color spaces as a function of the determined order, and printing the image in the selected device dependent color space.

The present invention will now be described by way of example with reference to the accompanying drawings, in which:

FIG. 1 is a schematic block diagram illustrating a printing system with color transformation, for converting device independent image descriptions to device dependent image descriptions for a printer printing in two directions.

FIG. 2 is a schematic block diagram illustrating the control arrangement of an ink jet printer incorporating the present invention.

FIG. 3 is a schematic perspective view of a multi-color, carriage type, thermal ink jet printer which prints information on a recording sheet according to the present invention.

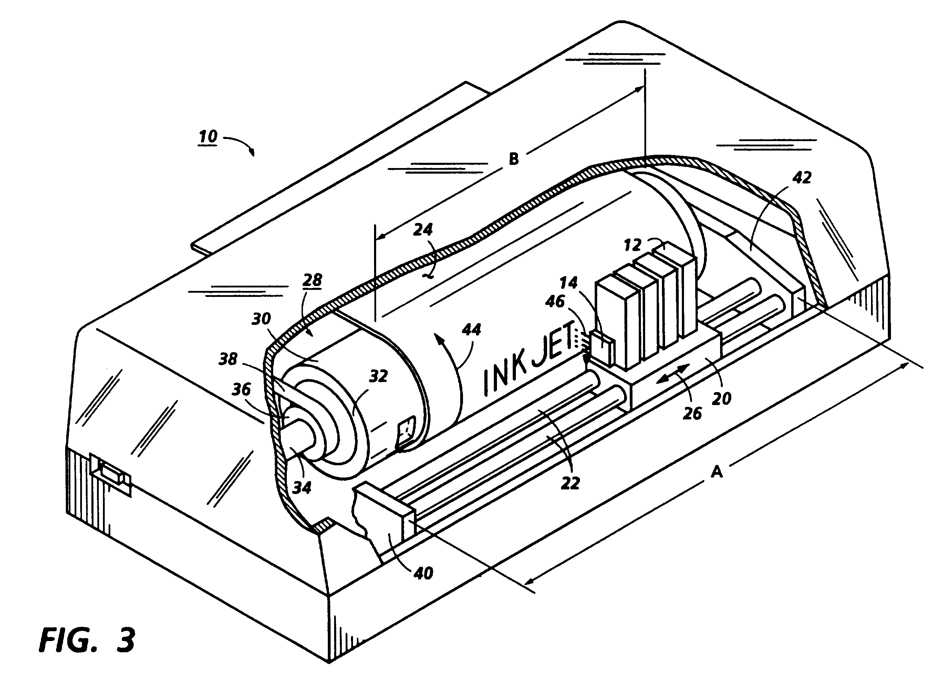

FIG. 3 illustrates a multicolor thermal ink jet printer 10 having several disposable ink supply cartridges 12, each including an attached printhead 14. The ink cartridge 12 or the ink cartridge and printhead 14 combination are removably mounted on a translatable carriage 20. During a printing operation, the carriage 20 reciprocates back and forth in the direction of an arrow 26 on, for example, guide rails 22 substantially parallel to a recording medium 24, such as a sheet of paper or a transparency. The end-to-end travel distance of the carriage and printheads is shown as a distance A. The carriage 20 is driven back and forth across the length of a cylindrical platen 28 by well known means such as, for example, a cable and pulley with a reversible motor (not shown). The platen has a diameter of approximately ten to twenty centimeters and is constructed, for example, with an aluminum sleeve 30 having end caps 32 mounted on a shaft 34. The shaft 34 has a pulley 36 mounted on one end which is driven by a stepper motor (not shown) and a belt 38. The platen 28 is rotatably mounted in frame sides 40 and 42 which also support the ends of the guide rails 22.

The platen 28 moves the recording medium 24 past the scanning printheads 14 for printing an image thereon. While printing, the recording medium 24 is held stationary by the platen 28 while the carriage is moving in one direction. Prior to or during the carriage motion in the reverse direction, the sheet is stepped by the platen 28 in the direction of an arrow 44 a distance equal to the height of the swath of information, or a portion thereof, printed by the printheads 14 during traversaT in one direction across the recording medium.

To enable printing by the entire plurality of printheads and to accommodate priming and maintenance stations (not shown), the overall travel distance A is larger than a printing region B, which is equal to or less than the width of the sheet 24. An encoder (not shown) monitors the position of the carriage 20 when the printheads are in the printing region. Droplets of ink are ejected on demand from a linear array or column of nozzles (not shown) located in the front faces (not shown) of the printheads along a plurality of trajectories 46 whereupon impacting the sheet, a dot or spot is formed. The front face of the printhead is spaced from the sheet a distance of between 0.25 and 2.5 mm (0.01 and 0.10 inch), with the preferred distance being approximately 0.5 mm (0.02 inches). The stepping tolerance of the platen drum 28, the recording medium 24, and the linear deviation of the printheads is held within acceptable limits to prevent unintended contiguous or overlapping lines of information from being printed.

Each cartridge 12 contains a different ink, typically one ink of black and one or more inks of different selected colors, such as cyan, magenta, or yellow. The cartridge or the combined cartridge and printhead is removed and discarded after the ink supply in the cartridge has been depleted.

During printing, some of the nozzles do not eject droplets during one complete carriage traversal and generally, none of the nozzles ejects droplets as the printheads move beyond the edge of the platen. While at the end of the carriage transit, a small dwell time in carriage traversal occurs while the platen is being stepped in the direction of the arrow 44. At this time, or during longer periods of dwell time, a maintenance and priming station (not shown), located on one side of the platen, collects ink and/or maintains the printhead nozzles. The lesser used nozzles may fire nozzle-clearing droplets and/or the nozzles may be capped to prevent them from drying out during idle time when the printer is not being used.

For a reciprocating carriage printer, printing is typically performed by scanning the printhead assembly in a first direction from left to right across the page to produce a swath of printed information having a height equivalent to the length of the linear array of nozzles. As the printhead assembly is moved in a second direction from right to left to prepare for the next sweep across the page, the paper is advanced to the next printing position (or the printheads may be advanced relative to the paper). The next printing sweep, then begins again and travels from left to right in order to preserve the order of inking This process continues until all portions of the image have been printed. Since for each swath the order in which the colorants are printed is the same, no banding occurs. Even if the paper is advanced to the next position prior to the time when the printhead reverses direction (at the end of each sweep in the first direction), printing could not be performed in the reverse direction since the order of inking is different and a marked color band will be visible in the final print. Throughput of the printer could, however, be improved and nearly doubled, if printing could be done in both directions. Consequently, it is desirable to print in both directions of reciprocating carriage and still avoid the problem of color banding.

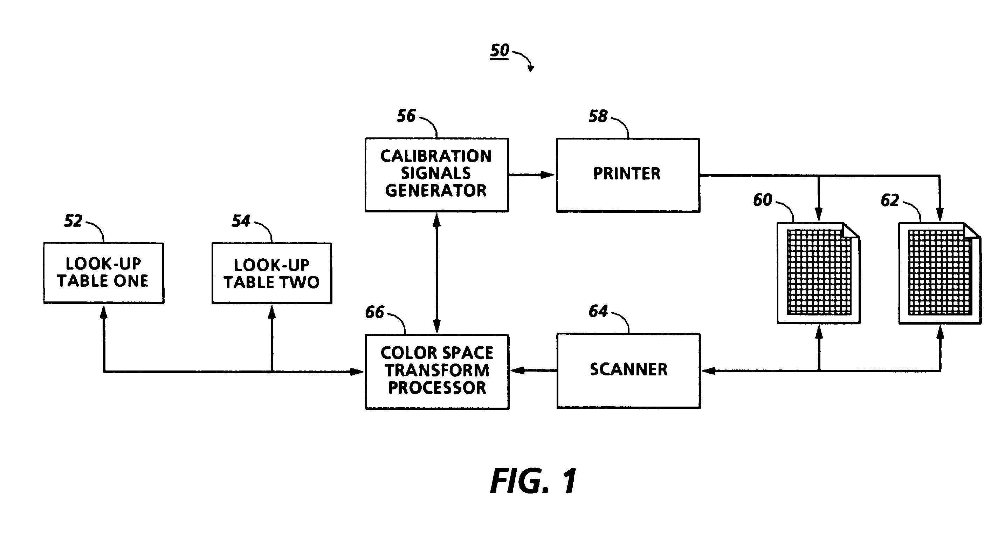

FIG. 1 illustrates one aspect of the present invention to enable an increase in the throughput of the reciprocating carriage printer by printing in both the forward and reverse directions and to accomplish bidirectional printing without noticeable color banding even though the colorants are deposited in a first order for the first direction and a different order for the second direction. As illustrated in FIG. 1, a block diagram of a printing system 50 for converting device independent image descriptions to device dependent image descriptions for effecting bidirectional color printing is shown.

The printing system 50 is used to enable a bidirectional printer to print color images received from a document creator by printing the received image in both scanning directions. Since the document creator provides an image defined in colorimetric terms, R, G, and B typically digital in nature, and the printer has an output which is defined as existing in a color space called CMYK, the present invention includes generating a first look-up table 52 and a second look-up table 54. Each of the look-up tables are generated by the printing system 50 and enables the printer to print color images bidirectionally with reduced or non-existent color banding problems.

To generate the first look-up table 52 and the second look-up table 54, the printing system 50 includes a calibration signal generator 56 coupled to a printer 58. The calibration signal generator 56 develops a number of calibration signals for causing the printer 58 to generate a first color calibration test sheet 60 and a second color calibration test sheet 62. The calibration test sheets 60 and 62 are generated by printing a large number, on the order of a 1,000 (10 cyan densities by 10 magenta densities by 10 yellow densities) patches of colors distributed throughout printer color space, i.e., a large set of printer driving signals are generated, in varying densities of combinations of cyan, magenta, and yellow, and used to drive the printer. Other CMY combinations of interest (e.g., skin tones, or other memory colors) may also be included. The first color calibration test sheet 60 is printed by the printer 58 only when the reciprocating carriage is printing in a first direction, such as from left to right. The second color calibration test sheet 62 is printed by the printer 58 also, but only when the reciprocating carriage is printing in a second direction, such as for right to left. Consequently, even though the printer 58 is printing colors according to calibration signals generated by the calibration signal generator 56, the order of color inking, and therefore the perceived color, will be different for the first color calibration test sheet 60 and the second color calibration test 62.

Once the color calibration test sheets have been completed, the colors of each of the patches of colors within a single test sheet will be measured, with a scanner 64, or a spectrophotometer, or a densitometer, to determine the colors generated in terms of R, B, and G. The output of the scanner 64 is then used by a color space transform processor 66 in combination with the calibration signals generated by the calibration signal generator 56 to generate the first look-up table 52 and the second look-up table 54, each of which respectively corresponds to the first color calibration test sheet 60 and the second color calibration test sheet 62. The measured colors of the patches in each of the test sheets are used by the color space transform processor 66 to build the look-up tables which are actually three dimensional look-up tables relating the R, B, and G defined colors to C, M, and Y defined colors stored therein. Conversions that do not include mapped and measured points may be interpolated from the measured data. Once the first look-up table 52 and the second look-up table 54 have been generated, a bidirectional scanning printer such as the one illustrated in Figure 3 uses the generated look-up tables to print bidirectionally.

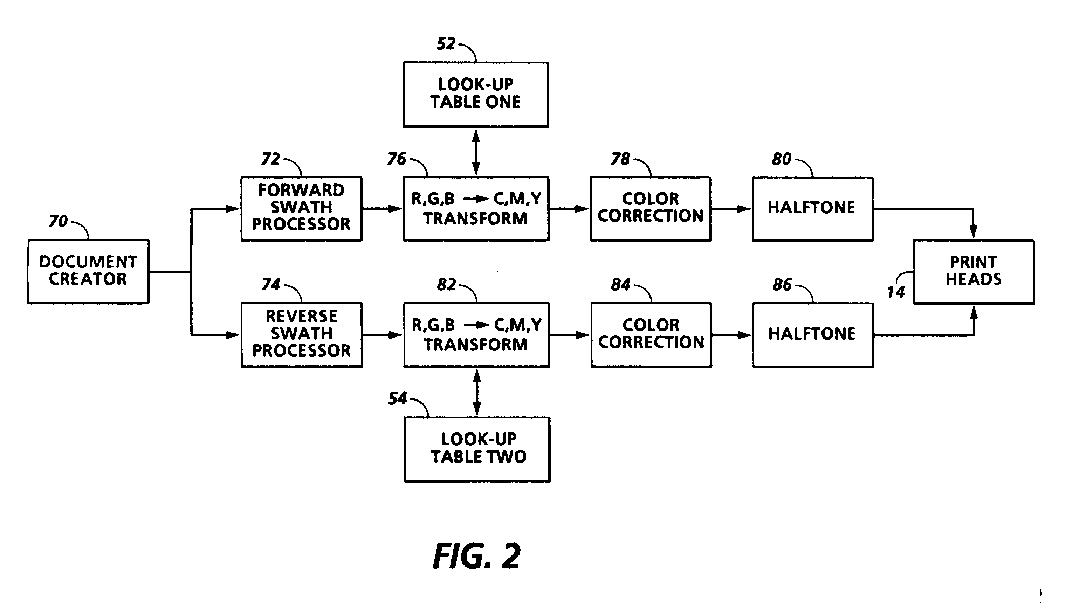

Figure 2 is a schematic block diagram illustrating a control arrangement for an ink jet printer, such as the one illustrated in Figure 3, incorporating the present invention and which uses the first look-up table 52 and the second look-up table 54.

A document creator 70 such as a scanner, a personal computer, or a computer workstation, generates a color image defined in colorimetric terms, typically digital in nature R, G, B. Commonly this description may be part of a page description language (PDL) file describing the document in device independent terms. The PDL file is received by the printer and is typically stored in some portion of read-only memory for access later by the printer for printing. Since the PDL language document is organized or arranged scan line by scan line, the present invention includes a forward swath processor 72 and a reverse swath processor 74, each of which accesses the appropriate scan line of the PDL document for printing. Consequently, when printing a first swath of information in a direction of from left to right, the forward swath processor will obtain the necessary number of scan lines from the PDL documents and transmit those scan lines to an R, G, B to C, M, Y transform processor 76 which will convert the R, G, B information of the first swath to C, M, Y information for printing. The transform processor 76 accesses the first look-up table 52 for making the transformation. Typically, the look-up table receives as addresses or indexes device independent signals describing the image and produces as a responsive output a device dependent signal. In an example of 8 bits per pixel/separation system, over 16,000,000 mappings would be required. Accordingly, coupled with the look-up table would be an interpolation arrangement, such as described in US-A-4,275,413. In addition to the transform processor 76, a color correction processor 78 may be included to provide undercolor removal and black addition, as would be understood by one skilled in the art.

It will no doubt be recognized that there are many methods of providing a transform from device independent data to device dependent data, with US-A-4,275,413 describing one method, which itself can be varied. Once a conversion is established, a method of interpolation referred to tri-linear or cubic interpolation may also be used to calculate output values from the limited set of input values. The values stored in the look-up table can be empirically derived as in US-A-4,275,413 or calculated or extrapolated based on empirical information.

Many other ways of producing colorant signals are possible, and equivalent to this one. Further discussion of the transformation from device independent to device dependent color descriptions, occurs, for example, in US-A-5,305,119.

Once any undercolor removal or black addition is completed, a halftone processor 80 provides halftoning which reduces the number of bits describing the density of each pixel to a number of levels reproducible on the selected printer. Applicable halftoning processes are described in, for example, US-A-4,149,194. The printheads 14 (Figure 3) then receive the processed information for printing as previously described.

The reverse swath is printed after the forward swath by moving the recording medium a distance sufficient to print a next swath of information. The reverse swath processor 74, which includes the necessary R, G, and B information for printing the return swath, is coupled to a second R,B,G to C,M,Y, and K transform processor 82 which accesses the second lookup table 54 for making the transformation. After transformation, any desired undercolor removal or black addition is completed by a second color correction processor 84. Halftoning is then performed by a halftone processor 86. The processed information for the return swath is then transmitted to the printheads 14 for printing of the return swath of information.

It will no doubt be appreciated that the invention can be accomplished with a hardware logic implementation thereof, or a software implementation on a programmable processing device, or a combination of hardware and software.

Thus, there has been described bidirectional printing for a liquid ink printer. It is therefore apparent that there has been provided in accordance with the present invention, a transform processor for printing in a first direction and second transform processor for printing in a second direction. While the present invention has been described in conjunction with a specific embodiment thereof, it will be apparent to those skilled in the art that the present invention is equally applicable to any liquid ink printer, including phase change ink printers and piezoelectric printers. Likewise, the present invention is not limited to scanning carriage type printers, but is also applicable to printers having partial width arrays.

## Claims

1. A method of printing an image with a liquid ink printer (10), the image including color produced by depositing overlapping colorants on a recording medium (24), the method comprising:
determining the order of overlapping colorants to be deposited on the recording medium;
selecting a device dependent color space from a plurality of device dependent color spaces as a function of the order determined in said determining step; and
printing (12,14,20) the image in the selected device dependent color space.

2. The method of claim 1, wherein said determining step comprises determining a first order and a second order of overlapping colorants to be deposited on the recording medium.

3. The method of claim 2, wherein said selecting step comprises selecting a first device dependent color space as a function of the first order of overlapping colorants, and selecting a second device dependent color space as a function of the second order of overlapping colorants.

4. The method of claim 3, wherein said printing step comprises printing the image in the first device dependent color space and in the second device dependent color space.

5. The method of claim 4, further comprising selecting a first color lookup table for printing in the first device dependent color space, and selecting a second color lookup table for printing in the second device dependent color space.

6. The method of any one of claims 1 to 5, wherein said printing step comprises printing the image with a bidirectional scanning printhead having an array of nozzles.

7. The method of claim 6, wherein said printing step comprises printing the image with the bidirectional scanning printhead scanning in a first direction for printing in the first device dependent color space, and in a second direction for printing in the second device dependent color space.

8. A method of printing an image with a liquid ink printer (10), the image including color produced by depositing overlapping colorants on a recording medium (24), the method comprising the steps of:
determining a first order and a second order of overlapping colorants to be deposited on the recording medium;
selecting a first device dependent color space as a function of the first order of overlapping colorants;
selecting a second device dependent color space as a function of the second order of overlapping colorants;
selecting a first color lookup table for printing in the first device dependent color space;
selecting a second color lookup table for printing in the second device dependent color space;
printing the image with the bidirectional scanning printhead (12,14,20) scanning in a first direction for printing in the first device dependent color space; and
scanning in a second direction for printing in the second device dependent color space.

9. The method of any one of claims 1 to 8, wherein said printing step comprises depositing colorants in a swath having a height equal to a length of the array of nozzles.

10. The method of claim 9, wherein said printing step comprises printing the image with a bidirectional scanning printhead having a plurality of nozzles arrays, the nozzle arrays aligned substantially parallel with respect one another.
